(19) Europäisches Patentamt

European Patent Office

Office européen des brevets

(11) Veröffentlichungsnummer: **0 257 402 B1**

(12) # EUROPÄISCHE PATENTSCHRIFT

(45) Veröffentlichungstag der Patentschrift: **25.11.92**

(21) Anmeldenummer: **87111391.6**

(22) Anmeldetag: **06.08.87**

Verbunden mit 87905438.5/0322410
(europäische
Anmeldenummer/Veröffentlichungsnummer)
durch Entscheidung vom 31.07.90.

Die Akte enthält technische Angaben, die nach
dem Eingang der Anmeldung eingereicht wurden
und die nicht in dieser Patentschrift enthalten sind.

(51) Int. Cl.⁵: **C08G 63/68**, C09D 163/00,
C09D 167/03

(54) **Verwendung von Carboxylgruppen und tertiäre Aminogruppen enthaltenden Polyestern zusammen mit Epoxidharzen als Auto-Reparaturlack.**

(30) Priorität: **29.08.86 DE 3629470**

(43) Veröffentlichungstag der Anmeldung:
**02.03.88 Patentblatt 88/09**

(45) Bekanntmachung des Hinweises auf die
Patenterteilung:
**25.11.92 Patentblatt 92/48**

(84) Benannte Vertragsstaaten:
**AT BE CH DE ES FR GB IT LI LU NL SE**

(56) Entgegenhaltungen:
**EP-A- 0 035 263      EP-A- 0 123 793
DE-A- 1 794 233      DE-A- 2 016 060
DE-A- 2 026 449      DE-A- 2 161 253
US-A- 3 128 265      US-A- 3 493 414**

(73) Patentinhaber: **BASF Lacke + Farben AG
Glasuritstrasse 1
W-4400 Münster(DE)**

(72) Erfinder: **Jung, Werner Alfons, Dr.
Uhrwerkerstrasse 65
W-4715 Ascheberg(DE)**
Erfinder: **Vorbeck, Udo
Rüllerstrasse 90
W-4715 Ascheberg(DE)**
Erfinder: **Schmitz, Arno, Dr.
Lerchenhain 92
W-4405 Nottuln(DE)**
Erfinder: **Heise, Wilhelm
Korbmacherweg 5
W-4400 Münster(DE)**
Erfinder: **Gross, Lutz-Werner, Dr.
Lavesumer Strasse 78
W-4358 Haltern(DE)**

(74) Vertreter: **Münch, Volker, Dr. et al
c/o BASF Lacke + Farben AG Patentabteilung Glasuritstrasse 1 Postfach 61 23
W-4400 Münster(DE)**

**Beschreibung**

Die vorliegende Erfindung betrifft die Verwendung bestimmter Überzugszusammensetzungen, enthaltend einen Carboxylgruppen und tertiäre Aminogruppen aufweisenden Polyester, ein Vernetzungsmittel für den Polyester, organische Lösungsmittel, übliche Zusatzstoffe und Hilfsmittel und ggf. Pigmente für die Autoreparaturlackierung.

Es ist bekannt, daß Verbindungen, die einen Epoxidring enthalten, mit carboxylgruppenhaltigen Verbindungen unter Ringöffnung reagieren. Beim Einsatz von Verbindungen mit mehr als einer Epoxidgruppe und mehr als einer Carboxylgruppe verläuft die Reaktion unter Ausbildung polymerer Ester, welche sekundäre Hydroxylgruppen enthalten. Diese Polymerenbildung ist bekannt unter dem Begriff "säurehärtende Epoxidharze".

Es ist bekannt, daß diese Epoxy-Carboxy-Reaktion durch geeignete basische Verbindungen katalysiert werden kann. Geeignete basische Katalysatoren sind z.B. Diazabicyclooctan, Diazabicyclononen, Diazabicycloundecen, Imidazolderivate, wie 3-Methyl-, Phenyl- oder Cyclohexylimidazol, Trialkylamine, wie Triethyl-, Tributyl-, Tricyclohexylamin, N,N'-Dialkylpiperazine, Trialkyl- bzw. Triarylphosphine, Hydroxyde, Carbonate und Salze organischer Säuren der Alkalimetalle, wie Lithiumhydroxyd, Kaliumcarbonat, Natrium- und Lithiumbenzoat. Weitere geeignete Katalysatoren sind Chelate des Magnesiums, Aluminiums und des Titans.

Aus der EP-B-2284 ist eine reaktive härtbare Polymerenmischung auf der Basis von Epoxidverbindungen und Polycarbonsäureeinheiten bekannt. Durch Verwendung mit primären Aminogruppen modifizierter Polycarbonsäuren werden primäre Aminogruppen enthaltende Polycarbonsäureeinheiten erhalten. Nachteilig ist in diesem Fall die Gefahr der Gelierung. Zur Erreichung niedriger Härtungstemperaturen und kurzer Härtungszeiten sind externe Katalysatoren erforderlich.

Aus der EP-B-51 275 ist eine reaktive härtbare Bindemittelmischung auf Basis von Epoxidverbindungen, Polycarbonsäureeinheiten auf der Basis von Polymerisations- und/oder Kondensationsprodukten und einer Katalysatorkomponente in Form von Alkali- und Erdalkalisalzen einer Polycarbonsäureeinheit bekannt. Die Mischungen härten bei Raumtemperatur oder bei wenig erhöhter Temperatur vollständig aus und sind insbesondere für Metalleffektlackierungen verwendbar. Der Härtungskatalysator ist in diesem Fall in Form eines Alkali- oder Erdalkalisalzes in das Bindemittel eingebaut. Obwohl es sich in diesem Fall um einen internen Katalysator handelt, können Unverträglichkeitsprobleme auftreten.

Aus der EP-B-5868 ist ein wasserlösliches reaktives Bindemittel bekannt, welches erhältlich ist aus cyclischen Polycarbonsäureverbindungen, salzbildenden Substanzen, wie z.B. organischen Basen, Hydroxylgruppen enthaltenden Polymeren sowie Epoxidverbindungen. Die einzelnen Bindemittelkomponenten können in chemisch gebundener Form vorhanden sein. Die Mischungen härten bei Raumtemperatur, und sie werden vorzugsweise in Form ihrer wäßrigen Lösungen verwendet. Organische Basen, wie beispielsweise tertiäre Aminoverbindungen, bewirken die Wasserlöslichkeit des Bindemittelsystems. Zur Härtungsbeschleunigung der Bindemittelmischung muß ein externer Katalysator verwendet werden, was mit erheblichen Problemen bezüglich der Verträglichkeit verbunden ist.

Aus der EP-A-123 793 sind Überzugszusammensetzungen bekannt auf der Basis von Vinylpolymeren mit tertiären Aminogruppen und Epoxidharz-Vernetzungsmitteln. Die tertiären Aminogruppen werden in die Additionscopolymere eingebaut durch Reaktion von Säureanhydridgruppen des Vinylharzes, beispielsweise mit tertiäre Aminogruppen enthaltenden Hydroxylverbindungen. Durch die Herstellung der Vinylharze wird erreicht, daß keine Verfärbung der Produkte durch die tertiären Aminogruppen auftritt. Es handelt sich bei den beschriebenen Systemen um Bindemittel auf der Basis von Additionspolymeren.

Aus der US-PS 3,128,265 sind antistatische Beschichtungsmittel für hydrophobe Filme und Fasern bekannt. Die Beschichtungsmittel basieren auf Polyestern, die tertiäre Aminogruppen sowie ggf. Carboxyl-, Hydroxylgruppen und Doppelbindungen sowie Epoxidharze enthalten. Die tertiären Aminogruppen werden vor oder nach dem Härtungsvorgang zum Beispiel mit Alkylhalogeniden quaternisiert. Die antistatischen Beschichtungsmittel eignen sich für Verpackungszwecke und photographische Filmelemente.

Die DE-A-21 61 253 beschreibt basisch modifizierte Alkydharze sowie deren Verwendung als Lackbindemittel. Die tertiären Aminogruppen werden über die Polyolkomponente in das Alkydharz eingebaut. Es wird als zweckmäßig in der DE-A-21 61 253 angegeben, einen Hydroxylgruppenüberschuß gegenüber den Carboxylgruppen bei der Polyveresterung einzusetzen. Die beschriebenen Alkydharze können mit den meisten der in der Lackindustrie üblichen Bindemittel kombiniert werden, wobei Melaminharze, Harnstoffharze, Phenolharze und Diisocyanate genannt werden. Die Aushärtung erfolgt bei Einbrennbedingungen hauptsächlich über die Hydroxylgruppen der basischen Alkydharze. Es handelt sich nicht um bei Raumtemperatur oder etwas erhöhten Temperaturen aushärtbare säurehärtende Epoxidharze.

Aus der US-PS 3,493,414 sind Mittel für texturierte Oberflächenbeschichtungen bekannt, die hergestellt

2

werden durch Vermischen einer Lösung eines sauren Polyesters mit Wasser und primären, sekundären oder tertiären aliphatischen Aminen oder Alkanolaminen. Anschließend wird die wäßrige Zusammensetzung mit epoxidiertem Pflanzenöl vermischt. Der Polyester soll dabei durch die Aminzugabe wasserlöslich gemacht werden. Ein Einbau von tertiären Aminogruppen in das Polyestermolekül findet also nicht statt.

Aus der DE-A-20 16 060 sind Polyesterharze bekannt, die tertiäre Alkydmonoamine einkondensiert enthalten. Die beschriebenen Polyesterharze weisen eine verbesserte Verträglichkeit mit anderen Harzen und eine verbesserte Löslichkeit in aliphatischen Kohlenwasserstoffen auf. Die DE-A-20 16 060 betrifft insbesondere lufttrocknende Systeme, bei denen die beschriebenen Alkydharze mit thermoplastischen Harzen zum Zweck der Beschleunigung der Lufttrocknung kombiniert werden. Eine Kombination von tertiäre Aminogruppen enthaltenden Polyestern mit Polyepoxidharzen ist der DE-A-20 16 060 nicht zu entnehmen.

Die Aufgabe der vorliegenden Erfindung bestand darin, ein Überzugsmittel für die Autoreparaturlackierung auf Basis säurehärtender Epoxidharze zu schaffen, wobei die vollständige Aushärtung des Überzugsmittels mit genügend hoher Geschwindigkeit und bei möglichst niedrigen Temperaturen erfolgen sollte. Die entstehenden Filme sollten gute oder sogar verbesserte Eigenschaften in bezug auf Härte und Elastizität aufweisen. Es sollte auf die Verwendung eines externen Katalysators verzichtet werden können, um Unverträglichkeitsprobleme zu vermeiden.

Die Erfindung betrifft die Verwendung einer Überzugszusammensetzung, enthaltend einen Carboxylgruppen und tertiäre Aminogruppen aufweisenden Polyester, als Vernetzungsmittel ein Epoxidharz mit im Mittel mehr als einer Epoxidgruppe pro Molekül, wobei das Verhältnis der freien Carboxylgruppen des Polyesters zur Anzahl der Epoxidgruppen des Epoxidharzes im Bereich von 1 : 5 bis 5 : 1 liegt, organische Lösungsmittel, übliche Zusatzstoffe und Hilfsmittel und ggf. Pigmente mit der Maßgabe, daß der Polyester hergestellt worden ist durch gleichzeitige oder stufenweise Veresterungs- und/oder Umesterungs- und ggf. Additionsreaktion von

a) Polycarbonsäuren oder deren Anhydriden, ggf. zusammen mit Monocarbonsäuren,

b) Polyolen, ggf. zusammen mit Monoolen und ggf.

c) einer mit dem Reaktionsprodukt aus a) und b) reaktionsfähigen Komponente, die ggf. tertiäre Aminogruppen enthält,

wobei der Polyester tertiäre Aminogruppen enthält, die aus der Komponente a) und/oder b) und/oder c) stammen, das Reaktionsprodukt aus a), b) und ggf. c) eine Säurezahl von 5 bis 200, bevorzugt 10 bis 130 und eine Aminzahl von 3 bis 150, bevorzugt 10 bis 100, aufweist,für die Reparaturlackierung von Autokarossen.

Geeignete Polycarbonsäuren (Komponente a) sind beispielsweise Phthalsäure, Isophthalsäure, Terephthalsäure, Halogenphthalsäuren, wie Tetrachlor- bzw. Tetrabromphthalsäure, Hexahydrophthalsäure, Adipinsäure, Sebacinsäure, Fumarsäure, Maleinsäure, Endomethylentetrahydrophthalsäure, Trimellitsäure sowie Anhydride der genannten Säuren, sofern diese existieren.

Ggf. können zusammen mit den Polycarbonsäuren auch Monocarbonsäuren eingesetzt werden, wie beispielsweise Benzoesäure, tert.-Butylbenzoesäure, Laurinsäure, Isononansäure und Fettsäuren natürlich vorkommender Öle.

Geeignete Alkoholkomponenten b) sind mehrwertige Alkohole, wie Ethylenglykol, Propandiole, Butandiole, Pentandiole, Hexandiole, Neopentylglykol, Diethylenglykol, Cyclohexandimethanol, Trimethylpentandiol, Ditrimethylolpropan, Trimethylolethan, Trimethylolpropan, Glycerin, Pentaerythrit, Dipentaerythrit, Trishydroxyethylisocyanurat, Polyethylenglykol, Polypropylenglykol, ggf. zusammen mit einwertigen Alkoholen, wie beispielsweise Butanol, Octanol, Laurylalkohol, ethoxylierten bzw. propoxylierten Phenolen.

Als Komponente a) (Carbonsäurekomponente) können u.a. oder ausschließlich Aminocarbonsäuren mit mindestens einer tertiären Aminogruppe verwendet werden. Beispiele hierfür sind: Pyridin-2-carbonsäure, Pyridin-3-carbonsäure, Pyridin-4-carbonsäure, Dimethylaminobenzoesäure und Pyridin-2,6-dicarbonsäure. Bevorzugt wird hierbei die Nicotinsäure, also Pyridin-3-carbonsäure, verwendet, weil dies bezüglich der Katalysierung der Säure/Epoxid-Reaktion eine sehr reaktive Aminocarbonsäure ist.

Als Komponente a) kann vorteilhafterweise das Reaktionsprodukt eines Aminoalkohols mit mindestens einer tertiären Aminogruppe und eines Polycarbonsäureanhydrids verwendet werden. Als Beispiel hierfür sei das Reaktionsprodukt aus 2-Hydroxyethylpyridin mit Phthalsäureanhydrid genannt.

Bevorzugt wird als Komponente a) das Reaktionsprodukt aus einem Polyamin mit mindestens einer tertiären und mindestens einer primären oder sekundären Aminogruppe und einem Polycarbonsäureanhydrid verwendet.

Als Alkoholkomponente b) können u.a. oder auch ausschließlich Aminoalkohole mit mindestens einer tertiären Aminogruppe verwendet werden. Als Beispiel hierfür seien 2-Hydroxyethylpyridin und Dimethylaminopropanol genannt. Bevorzugt werden als Alkoholkomponente b) Umsetzungsprodukte von Epoxidharzen mit Carbonsäuren und/oder Aminen eingesetzt.

3

Als modifizierende Komponente c) werden bevorzugt Polyisocyanate und/oder Diepoxidverbindungen, ggf. auch Monoisocyanate und/oder Monoepoxidverbindungen verwendet. Geeignete Polyisocyanate sind beispielsweise die Toluylendiisocyanate, Hexamethylendiisocyanat sowie Isophorondiisocyanat. Unter Diepoxidverbindungen sind Epoxidharze mit im Mittel etwa zwei Epoxidgruppen pro Molekül zu verstehen. Geeignete Monoepoxidverbindungen sind beispielsweise Olefinoxide, wie Octylenoxid, Butylglycidylether, Allylglycidylether, Phenylglycidylether,p-Butylphenolglycidylether, Kresylglycidylether, Styryloxid, Glycidylmethacrylat, Cyclohexenvinylmonoxid, Dipentenmonoxid, $\alpha$-Pinenoxid sowie Glycidylester von tertiären Carbonsäuren.

Es ist besonders vorteilhaft, wenn als Alkoholkomponente b) das Umsetzungsprodukt von niedrigmolekularen Epoxidharzen mit Polycarbonsäuren und/oder Polycarbonsäureanhydriden und Aminocarbonsäuren mit mindestens einer tertiären Aminogruppe und/oder Polyaminen mit mindestens einer tertiären und mindestens einer primären oder sekundären Aminogruppe verwendet wird, wobei anschließend ggf. noch mit der Säure und der Alkoholkomponente verestert und ggf. mit Polyisocyanaten modifiziert wird. Unter niedrigmolekularen Epoxidharzen sind Epoxidharze mit einem Molekulargewicht unter etwa 2000 zu verstehen.

Als mit dem Reaktionsprodukt aus a) und b) reaktionsfähige Komponenten (c) werden bevorzugt Monoisocyanate mit mindestens einer tertiären Aminogruppe verwendet. Diese können beispielsweise durch Umsetzung von geeigneten Diisocyanaten, wie Isophorondiisocyanat, mit Aminoalkoholen mit einer tertiären Aminogruppe, wie beispielsweise Hydroxyethylpyridin oder Dimethylaminoethanol, oder mit Polyaminen mit mindestens einer tertiären und mindestens einer sekundären oder primären Aminogruppe hergestellt werden. Die Monoisocyanate werden durch Reaktion mit freien Hydroxylgruppen des Polyesters unter Ausbildung einer Urethanbindung an das Bindemittelsystem gebunden.

Vorteilhafterweise werden als Komponente c) Polyamine mit mindestens einer tertiären und mindestens einer primären oder sekundären Aminogruppe verwendet. Als Beispiel hierfür sei Dimethylaminopropylmethylamin genannt.

Als Alkoholkomponente kann vorzugsweise auch das Ringöffnungsprodukt von Epoxidharzen mit wasserstoffaktiven Verbindungen verwendet werden. So könne z.B. stufenweise zuerst Diepoxide, z.B. die handelsüblichen Produkte ®Epikote mit Dicarbonsäuren, wie beispielsweise Pyridin-2,6-dicarbonsäure, zu einem Vorprodukt umgesetzt werden, welches dann als Alkoholkomponente weiter eingesetzt wird.

Erfindungswesentlich ist in jedem Fall, daß das erhaltene Endprodukt eine Säurezahl im Bereich von 5 bis 200 und eine Aminzahl im Bereich von 3 bis 150 aufweist.

Bevorzugt ist es, wenn der Polyester erhalten worden ist aus

a) Polycarbonsäuren oder deren Anhydriden, ggf. zusammen mit Monocarbonsäuren,

b) Polyolen, ggf. zusammen mit Monoolen, wobei die Komponenten a) und/oder b) ethylenisch ungesättigte Doppelbindungen enthalten, und

c1) Mercaptoverbindungen mit mindestens einer tertiären Aminogruppe und ggf.

c2) weiteren modifizierten Komponenten,

wobei das Produkt tertiäre Aminogruppen enthält, die im wesentlichen oder vollständig aus der Komponente c1) stammen. Als Komponente a) werden in diesem Fall beispielsweise Maleinsäureanhydrid oder ungesättigte Fettsäuren verwendet; ein als Komponente b) geeigneter ungesättigter Alkohol ist beispielsweise 1,4-Butendiol. In diesem Fall addieren die Mercaptogruppen des Aminomercaptans mit einer tertiären Aminogruppe an die Doppelbindungen, die durch die Komponente a) und/oder b) in das Bindemittel mit eingebracht werden.

Bevorzugt sind bei der erfindungsgemäßen Verwendung Polyester, die erhalten worden sind durch Umsetzung eines höhermolekularen Epoxidharzes mit im Mittel mindestens drei Epoxidgruppen pro Molekül mit Polycarbonsäuren und/oder Polycarbonsäureanhydriden und mit einer Aminocarbonsäure mit mindestens einer tertiären Aminogruppe und/oder Polyaminen mit mindestens einer tertiären und mindestens einer primären oder sekundären Aminogruppe. Als höhermolekulare Epoxidharze mit im Mittel mindestens drei Epoxidgruppen pro Molekül können beispielsweise epoxidierte Novolake eingesetzt werden. Diese werden gebildet durch Reaktion von Novolaken mit Epichlorhydrin.

Bei Verwendung von Epoxidharzen sollten chlorarme Typen eingesetzt werden, da sonst eine starke Verfärbung der Produkte auftreten kann.

Durch Zugabe von Antioxidantien oder Reduktionsmitteln, wie z.B. unterphosphorige Säure, wird eine zu starke Verfärbung der Produkte während der Kondensation vermieden.

Beispiele für geeignete Epoxidharze sind Kondensationsprodukte aus Epichlorhydrin und Bisphenol A, beispielsweise cycloaliphatische Bisepoxide, epoxidierte Polybutadiene, die durch Reaktion von handelsüblichen Polybutadienölen mit Persäuren bzw. organischen Säure-$H_2O_2$-Mischungen entstehen, Epoxidierungsprodukte natürlich vorkommender Fette, Öle, Fettsäurederivate, modifizierter Öle, epoxidgruppenhaltige Novolake, Glycidylether eines mehrwertigen Alkohols, z.B. Ethylenglykoldiglycidylether, Glycerinpolyglycidylether, Sorbitolpolyglycidylether, Trimethylolpropanpolyglycidylether und Pentaerythritpolyglycidylether sowie geeignete Acrylatharze mit seitenständigen Oxirangruppen. Des weiteren können auch vorteilhaft als Vernetzungsmittel Umsetzungsprodukte von hydroxylgruppenhaltigen Polyepoxiden mit Di- oder Polyisocyanaten eingesetzt werden, wie sie z.B. durch Umsetzung OH-funktioneller Epoxide, wie z.B. von Sorbitolpolyglycidylethern, mit Isophorondiisocyanat entstehen.

Geeignete Lösungsmittel sind beispielsweise Toluol, Xylol, Butanol, Ethylacetat, Butylacetat, Pentylacetat, Glutarsäuredimethylester, Bernsteinsäuredimethylester, 1-Methoxypropyl-2-acetat, 2-Ethylhexanol, Ethylenglykoldiacetat, Ethylenglykolmonoethyl- oder -butylether oder deren Acetate, Ethylenglykoldimethylether, Diethylenglykoldimethylether, Aromaten enthaltende Benzine, Cyclohexanon, Methylethylketon, Aceton, Acetoxyglykolsäurebutylester, Acetoxyglykolsäureethylester. Geeignete Zusatzstoffe und Hilfsmittel sind beispielsweise Füllstoffe, wie z.B. Talkum, Glimmer, Kaolin, Kreise, Quarzmehl, Asbestmehl, Bariumsulfat, Silikate, Glasfasern, Antiabsetzmittel, wie beispielsweise fein verteilte Kieselsäure, Bentonit und kolloide Silikate.

Die gemäß der vorliegenden Erfindung eingesetzten Überzugsmittel sind herstellbar, indem der Polyester, welcher nach den zuvor beschriebenen Verfahren hergestellt worden ist, das Epoxidharz mit im Mittel mehr als einer Epoxidgruppe pro Molekül sowie organische Lösungsmittel, übliche Zusatzstoffe und Hilfsmittel sowie ggf. Pigmente durch Mischen und ggf. Dispergieren zu einer Überzugsmasse verarbeitet werden, wobei das Verhältnis der freien Carboxylgruppen des Polyesters zur Anzahl der Epoxidgruppen des Epoxidharzes im Bereich von 1 : 5 bis 5 : 1 liegt.

Die Überzugsmittel lassen sich auf die verschiedensten Unterlagen aufbringen. Geeignete Substrate sind beispielsweise Metalle, wie Eisen, Zink, Titan, Kupfer, Aluminium, Stahl, Messing, Bronze und Magnesium.

Die erfindungsgemäß zu verwendenden Überzugsmittel härten bei relativ niedriger Temperatur, d.h. bei Raumtemperatur oder etwas erhöhten Temperaturen. Die niedrige Härtungstemperatur sowie die kurze Härtungszeit sind auf das Vorliegen eines internen Katalysators im Bindemittelsystem zurückzuführen. Sind kurze Härtungszeiten und niedrige Härtungstemperaturen erwünscht, so wird ein Polyester mit einer relativ hohen Aminzahl eingesetzt.

Durch eine geeignete Auswahl der Alkoholkomponente, der Säurekomponente und der modifizierenden Komponenten können die Eigenschaften des Endproduktes in bezug auf Härte, Elastizität sowie Reaktivität hervorragend gesteuert werden.

Aromatische Säurekomponenten führen zu Produkten mit höherer Härte, cycloaliphatische oder aliphatische Säurekomponenten führen zu elastischeren Filmen.

Durch Verwendung geeigneter Monocarbonsäuren kann ebenfalls ein Einfluß auf Härte und Elastizität genommen werden. Bei Verwendung von Benzoesäure werden relativ harte, bei Verwendung von Fettsäuren dagegen wesentlich weichere Filme erhalten. Der Einsatz von Hexandiolen als Alkoholkomponente führt zu elastischen Filmen, wohingegen die Verwendung von Neopentylglykol und Pentaerythrit zu relativ harten Überzügen führt.

Aromatische tertiäre Aminogruppen im Bindemittelsystem weisen eine höhere katalytische Wirksamkeit auf als aliphatische oder araliphatische Aminogruppen.

Aufgrund der niedrigen Härtungstemperaturen und der kurzen Härtungszeiten werden die Überzugsmittel verwendet für die Autoreparaturlackierung.

Sie eignen sich hervorragend als Decklack, Füller, Klarlack, Primer oder Grundierung.

Die Auswahl des Epoxidharzes richtet sich nach dem Verwendungszweck. Bei der Verwendung als Decklack werden bevorzugt aliphatische Epoxidharze verwendet, für Grundierungen sind auch aromatische Epoxidharze geeignet.

Das bei der Verwendung als Klarlack ggf. auftretende Problem der Verfärbung kann dadurch umgangen werden, daß bevorzugt aliphatische tertiäre Aminogruppen in das Bindemittelsystem eingebaut werden. Bei Klarlacken sollten chlorarme oder chlorfreie Epoxidharze eingesetzt werden; es treten dann keine Verfärbungserscheinungen auf.

Die aus den Bindemitteln bzw. Überzugsmitteln erhaltenen Filme haben hervorragende Eigenschaften in bezug auf Härte, Elastizität und Reaktivität. Ein weiterer Vorteil besteht darin, daß auf die Verwendung eines externen Katalysators verzichtet werden kann.

Nachfolgend wird die Erfindung anhand von Ausführungsbeispielen näher erläutert. Teile bedeuten Gewichts-Teile, sofern nichts anderes angegeben wird.

Beispiel 1:

Herstellung des Polyesterharzes I

In einem 4-Liter-Polykondensationskessel mit Rührer und Wasserabscheider werden 1110,7 Teile Phthalsäureanhydrid, 742,1 Teile Trimethylolpropan, 187,2 Teile Pyridin-3-carbonsäure und 139,2 Teile 2-Ethylhexansäure unter Zugabe von 87 Teilen Xylol als Schleppmittel langsam aufgeheizt und bei 200-205ºC bis zu einer Säurezahl von etwa 70 kondensiert. Nach dem Abkühlen und dem Anlösen mit 420 Teilen Xylol, 420 Teilen Methoxypropanol und 420 Teilen Butylacetat (98/100) wird eine Lösung des sauren Polyesters mit einer Säurezahl von 66, einer Viskosität (original) von 27 dPa•s und einem Festkörper von 60 % erhalten.

Beispiel 2:

Herstellung des Polyesterharzes II

In einem Polykondensationskessel mit Rührer und Wasserabscheider werden 880 Teile Phthalsäureanhydrid, 247,2 Teile Trimethylhexansäure, 192,5 Teile Pyridin-3-carbonsäure und 838,7 Teile Trimethylolpropan unter Zugabe von 86 Teilen Xylol als Schleppmittel und 0,648 Teilen unterphosphoriger Säure langsam auf 205ºC aufgeheizt und bei 205-210ºC bis zu einer Säurezahl von etwa 12 kondensiert. Danach wird auf 130ºC abgekühlt und mit 396 Teilen Xylol angelöst. Anschließend werden 325 Teile Phthalsäureanhydrid zugegeben und bei 130ºC an die Hydroxylgruppen des Polyesters addiert. Nach beendeter Addition wird mit 281 Teilen Xylol und 763 Teilen Butanol angelöst. Die so erhaltene Harzlösung hat einen Festkörper von 63 %, eine Säurezahl von 64 und eine Viskosität von 27 dPa•s (original).

Beispiel 3:

Herstellung des Polyesterharzes III

In einem Polykondensationskessel werden 493 Teile Isophthalsäure, 440 Phthalsäureanhydrid, 247,2 Teile Trimethylhexansäure, 192,5 Teile Pyridin-3-carbonsäure und 838,7 Teile Trimethylolpropan unter Zugabe von 88 Teilen Xylol als Schleppmittel und 0,6634 Teilen unterphosphoriger Säure langsam auf ca. 200ºC aufgeheizt und bei 200-210ºC bis zu einer Säurezahl von 20 kondensiert. Es wird auf 130ºCabgekühlt und mit 532 Teilen Xylol angelöst. Danach werden 450 Teile Phthalsäureanhydrid zugegeben und bei 130ºC an den Polyester addiert. Nach Zugabe von 376 Teilen Xylol und 995 Teilen Butanol hat die erhaltene Polyesterlösung einen Festkörper von 59 %, eine Säurezahl von 88,5 und eine Viskosität von 11 dPa•s (original).

Beispiel 4:

Herstellung des Polyesterharzes IV

In einem Polykondensationskessel werden 315,6 Teile Phthalsäureanhydrid und 131,1 Teile 2-Hydroxyethylpyridin bei 140-150ºC 4 Stunden lang gehalten, dann werden bei 140ºC 409,4 Teile Trimellitsäureanhydrid, 310,5 Teile Neopentylglykol, 285,7 Teile Trimethylolpropan, 130,1 Teile Benzoesäure und 168,5 Trimethylhexansäure und 0,525 Teile unterphosphorige Säure sowie als Schleppmittel 70 Teile Xylol zugegeben. Es wird auf 175ºC aufgeheizt und bis zur Säurezahl von etwa 84 kondensiert. Nach Abkuhlung und Anlösen mit 557 Teilen Xylol und 557 Teilen Butanol wird eine Polyesterlösung mit einem Festkörper von 57 %, einer Säurezahl von 84 und einer Viskosität (original) von 21 dPa•s erhalten.

Beispiel 5:

Herstellung des Polyesterharzes V

In einem Polykondensationskessel werden 443,5 Teile Isophthalsäure, 411,4 Teile Hexahydrophthalsäure, 105,5 Teile Isononansäure, 333 Teile para-tert. Butylbenzoesäure, 304,8 Teile 4-(N,N-Dimethylamino)-benzoesäure, 537 Teile Trimethylolpropan, 263,4 Teile Pentaerythrit und 0,959 Teile unterphosphorige Säure sowie 96 Teile Xylol als Schleppmittel langsam auf 195ºC aufgeheizt und bei 195-205ºC bis zu einer Säurezahl von 15 kondensiert. Anschließend wird gekühlt und mit 305 Teilen Xylol angelöst. Zu 1 172 Teilen dieser Harzlösung werden 169,4 Teile Hexahydrophthalsäure und 116 Teile Xylol zugegeben, und

bei 140°C wird das Anhydrid an den Polyester addiert. Nach Anlösen mit 390 Teilen Xylol und 98 Teilen Butanol wird eine Harzlösung mit einem Festkörper von 61 %, einer Säurezahl von 68 und einer Viskosität (original) von 26,5 dPa•s erhalten. (Die Viskosität einer mit Xylol auf 50 % FK verdünnten Lösung beträgt 4,3 dPa•s.)

Beispiel 6:

Herstellung des Polyesterharzes VI

In einem Polykondensationskessel werden 230 Teile Pyridin-3-carbonsäure, 333 Teile 4-tert.-Butylbenzoesäure, 105,5 Teile Isononansäure, 443,5 Teile Isophthalsäure, 411,4 Teile Hexahydrophthalsäure, 537 Teile Trimethylolpropan, 263,4 Teile Pentaerythrit, 0,93 Teile unterphosphorige Säure sowie 93 Teile Xylol als Schleppmittel langsam auf 220°C aufgeheizt und bis zu einer Säurezahl von 20,2 kondensiert. Nach dem Abkühlen und dem Anlösen mit 1-Methoxypropylacetat-2 werden 444 Teile Trimellitsäureanhydrid zugegeben. Es wird bei 140°C gehalten, bis eine Säurezahl (alkoholisch) von 126 erreicht ist. Zu 1 800 Teilen dieser Polyesterlösung werden 290 Teile eines Glycidylesters einer $C_{10}$-$\alpha,\alpha'$-Alkylalkancarbonsäure (z.B. ®Cardura E 10) gegeben und bei 85-90°C gehalten, bis eine Säurezahl von 65 erreicht ist. Die Zugabe von 150 Teilen Xylol, 150 Teilen 1-Methoxypropylacetat-2 und 750 Teilen Methoxypropanol führt zu einer carboxylgruppenhaltigen Polyesterlösung mit einem Festkörper von 50,5 %, einer Säurezahl von 69 und einer Viskosität von 19 dPa•s.

Beispiel 7:

Herstellung des Polyesterharzes VII

In einem Polykondensationskessel werden 518,2 Teile Isophthalsäure, 481 Teile Hexahydrophthalsäure, 627,5 Teile Trimethylolpropan, 324,7 Teile Neopentylglykol, 249,6 Teile Pyridin-3-carbonsäure, 1,1 Teile Zinn(II)-octoat und 88 Teile Xylol als Schleppmittel langsam auf 200°C aufgeheizt und bei 200-210°C bis zu einer Säurezahl von 11 kondensiert. Danach wird auf 140°C gekühlt, und es werden 369,6 Teile Hexahydrophthalsäure bei 140°C addiert, bis eine Säurezahl von 73,5 erreicht ist. Es wird mit 500 Teilen 1-Methoxypropylacetat-2 und 423 Teilen Xylol angelöst. 1240 Teile dieser Polyesterlösung werden auf 120°C erhitzt, und 80,3 Teile Isophorondiisocyanat werden innerhalb von 30 min bei 120°C addiert. Es wird mit 580 Teilen Methoxypropanol angelöst, die erhaltene Harzlösung hat einen Festkörper von 55 %, eine Säurezahl von 58 und eine Viskosität von 25 dPa•s (original).

Beispiel 8:

Herstellung des Polyesterharzes VIII

In einem Polykondensationskessel werden 469,2 Teile Phthalsäureanhydrid, 263,1 Teile Isophthalsäure, 456,7 Teile Trimethylolpropan, 538,9 Teile Epoxidharz (Basis Bisphenol A, Epoxidäquivalentgewicht 190), 187,8 Teile Isononansäure, 175,5 Teile Pyridin-3-carbonsäure, 0,627 Teile unterphosphorige Säure und 84 Teile Xylol als Schleppmittel langsam auf 200°C aufgeheizt und bis zu einer Säurezahl von 45 kondensiert. Nach Abkühlen auf 130°C werden 390 Teile Xylol und 247 Teile Phthalsäureanhydrid zugegeben. Die Temperatur wird bei 130°C gehalten, bis eine Säurezahl von 87 erreicht ist. Danach wird mit 234 Teilen Xylol und 708 Teilen Butanol angelöst. Die carboxylgruppenhaltige Polyesterharzlösung hat eine Säurezahl von 86, einen Festkörper von 62 % und eine Viskosität (mit Xylol auf 50 % verdünnt) von 5,2 dPa•s.

Die Polyesterlösungen aus den Beispielen I bis VIII werden mit verschiedenen Epoxidharzen gemischt. Die Mischungen aus den Polyesterlösungen I, II, III, IV, V, VI und VIII werden mit Xylol auf 55 % Festkörper eingestellt, die Mischung aus dem Polyesterharz VII wird dagegen auf 50 % Festkörper eingestellt. Die Mischungen werden auf Glastafeln aufgerakelt (200 μm Naßfilm). Es wird entweder nur bei Raumtemperatur gehärtet oder nach einer 30minütigen Trocknung bei 60°C bei Raumtemperatur nachgehärtet. Die Vernetzung erfolgt mit den Epoxidharzen A, B oder C.

A: Aromatisches Epoxidharz auf Basis Bisphenol A, Epoxidäquivalentgewicht 450.

B: Aromatisches Epoxidharz auf Basis Glycidylether eines Novolaks, Epoxidäquivalentgewicht 178.

C: Aliphatisches Epoxidharz auf Basis eines Polyglycidylethers eines Polyols (Sorbitol), Epoxidäquivalentgewicht 180.

7

| Beispiel | Polyesterharz | Epoxidharz | Mischungsverhältnis fest/fest | Trocknungsbedingungen |
|---|---|---|---|---|
| a | I | A | 64/36 | 30 min/60°C |
| b | IV | B | 79/21 | 30 min/60°C |
| c | V | B | 82/18 | 30 min/60°C |
| d | VII | B | 85/15 | 30 min/60°C |
| e | VI | V | 80/20 | RT |
| f | III | C | 74/26 | RT |
| g | II | C | 81/19 | RT |
| h | VIII | B | 79/21 | RT |

| Beispiel | Pendelhärte *) nach 6 Tagen (sec) | Doppelhübe mit Methylethyl- keton nach 6 Tagen **) |
|---|---|---|
| a | 162 | 160 |
| b | 81 | 120 |
| c | 94 | 30 |
| d | 137 | 200 |
| e | 84 | 200 |
| f | 203 | 145 |
| g | 130 | 200 |
| h (8 Tage) | 150 | 200 |

| | nach 2 Tagen | nach 2 Tagen |
|---|---|---|
| g | 102 | 200 |

| | nach 3 Tagen | nach 3 Tagen |
|---|---|---|
| h | 98 | 200 |

## Patentansprüche

1. Verwendung einer Überzugszusammensetzung, enthaltend einen Carboxylgruppen und tertiäre Aminogruppen aufweisenden Polyester, als Vernetzungsmittel ein Epoxidharz mit im Mittel mehr als einer Epoxidgruppe pro Molekül, wobei das Verhältnis der freien Carboxylgruppen des Polyesters zur Anzahl der Epoxidgruppen des Epoxidharzes im Bereich von 1 : 5 bis 5 : 1 liegt, organische Lösungsmittel, übliche Zusatzstoffe und Hilfsmittel und ggf. Pigmente mit der Maßgabe, daß der Polyester hergestellt worden ist durch gleichzeitige oder stufenweise Veresterungs- und/oder Umesterungs- und ggf. Additionsreaktionen von

    a) Polycarbonsäuren oder deren Anhydriden, ggf. zusammen mit Monocarbonsäuren,

    b) Polyolen, ggf. zusammen mit Monoolen und ggf.

    c) einer mit dem Reaktionsprodukt aus a) und b) reaktionsfähigen Komponente, die ggf. tertiäre Aminogruppen enthält,

wobei der Polyester tertiäre Aminogruppen enthält, die aus der Komponente a) und/oder b) und/oder c) stammen, das Reaktionsprodukt aus a), b) und ggf. c) eine Säurezahl von 5 bis 200, bevorzugt 10 bis 130 und eine Aminzahl von 3 bis 150, bevorzugt 10 bis 100, aufweist, für die Reparaturlackierung

EP 0 257 402 B1

von Autokarossen.

2. Verwendung nach Anspruch 1, dadurch gekennzeichnet, daß als Komponente a) Aminocarbonsäuren mit mindestens einer tertiären Aminogruppe verwendet werden.

3. Verwendung nach Anspruch 2, dadurch gekennzeichnet, daß als Komponente a) Pyridin-3-carbonsäure verwendet wird.

4. Verwendung nach Anspruch 1, dadurch gekennzeichnet, daß als Komponente a) das Reaktionsprodukt eines mindestens eine tertiäre Aminogruppe enthaltenden Aminoalkohols mit einem Polycarbonsäureanhydrid verwendet wird.

5. Verwendung nach Anspruch 1, dadurch gekennzeichnet, daß als Komponente a) das Reaktionsprodukt aus einem Polyamin mit mindestens einer tertiären und mindestens einer primären oder sekundären Aminogruppe und einem Polycarbonsäureanhydrid verwendet wird.

6. Verwendung nach Anspruch 1 bis 5, dadurch gekennzeichnet, daß als Komponente b) Aminoalkohole mit mindestens einer tertiären Aminogruppe verwendet werden.

7. Verwendung nach Anspruch 1 bis 6, dadurch gekennzeichnet, daß als Komponente b) Umsetzungsprodukte von Epoxidharzen mit Carbonsäuren und/oder Aminen verwendet werden.

8. Verwendung nach Anspruch 1 bis 7, dadurch gekennzeichnet, daß als Komponente c) Polyisocyanate und/oder Diepoxidverbindungen, ggf. auch Monoisocyanate und/oder Monoepoxidverbindungen verwendet werden.

9. Verwendung nach Anspruch 8, dadurch gekennzeichnet, daß als Komponente b) das Umsetzungsprodukt von niedrigmolekularen Epoxidharzen mit Polycarbonsäuren und/oder Polycarbonsäureanhydriden und Aminocarbonsäuren mit mindestens einer tertiären Aminogruppe und/oder Polyaminen mit mindestens einer tertiären und mindestens einer primären oder sekundären Aminogruppe verwendet wird, wobei anschließend ggf. noch mit weiteren Komponenten a) und b) verestert und ggf. mit Polyisocyanaten modifiziert wird.

10. Verwendung nach Anspruch 1 bis 9, dadurch gekennzeichnet, daß als Komponente c) ein mindestens eine tertiäre Aminogruppe aufweisendes Monoisocyanat verwendet wird.

11. Verwendung nach Anspruch 1 bis 10, dadurch gekennzeichnet, daß als Komponente c) ein Polyamin mit mindestens einer tertiären und mindestens einer primären oder sekundären Aminogruppe verwendet wird.

12. Verwendung nach Anspruch 1, dadurch gekennzeichnet, daß zur Herstellung des Polyesters
    a) Polycarbonsäuren oder deren Anhydride, ggf. zusammen mit Monocarbonsäuren,
    b) Polyole, ggf. zusammen mit Monoolen,

wobei die Komponente a) und/oder b) ethylenisch ungesättigte Doppelbindungen enthalten, und
    c1) Mercaptoverbindungen mit mindestens einer tertiären Aminogruppe und ggf.
    c2) weitere modifizierende Komponenten
umgesetzt worden sind mit der Maßgabe, daß das Produkt tertiäre Aminogruppen enthält, die im wesentlichen oder vollständig aus der Komponente c1) stammen.

13. Verwendung nach Anspruch 1, dadurch gekennzeichnet, daß zur Herstellung des Polyesters höhermolekulare Epoxidharze mit im Mittel mindestens drei Epoxidgruppen pro Molekül mit Polycarbonsäuren und/oder Polycarbonsäureanhydriden und mit einer Aminocarbonsäure mit mindestens einer tertiären Aminogruppe und/oder Polyaminen mit mindestens einer tertiären und mindestens einer primären oder sekundären Aminogruppe umgesetzt worden sind.

**Claims**

9

1. Use of a coating composition containing a polyester containing carboxyl groups and tertiary amino groups, an epoxy resin containing on average more than one epoxide group per molecule as crosslinking agent, where the ratio between the free carboxyl groups of the polyester and the number of epoxide groups of the epoxy resin is in the range from 1:5 to 5:1, organic solvents, customary additives and auxiliaries and, if appropriate, pigments, with the proviso that the polyester has been prepared by simultaneous or stepwise esterification and/or transesterification and optionally addition reactions of
    a) polycarboxylic acids or anhydrides thereof, if appropriate together with monocarboxylic acids,
    b) polyols, if appropriate together with monools, and, if appropriate,
    c) a component which is capable of reacting with the reaction product from a) and b) and, if appropriate, contains tertiary amino groups, where the polyester contains tertiary amino groups which originate from component a) and/or b) and/or c), and the reaction product from a), b), and if appropriate c) has an acid number from 5 to 200, preferably 10 to 130, and an amine number from 3 to 150, preferably 10 to 100 for refinishing of automobile bodywork.

2. Use according to Claim 1, characterised in that component a) used comprises aminocarboxylic acids containing at least one tertiary amino group.

3. Use according to Claim 2, characterised in that component a) used comprises pyridine-3-carboxylic acid.

4. Use according to Claim 1, characterised in that component a) used comprises the product of the reaction of an aminoalcohol containing at least one tertiary amino group with a polycarboxylic anhydride.

5. Use according to Claim 1, characterised in that component a) used comprises the product of the reaction of a polyamine containing at least one tertiary and at least one primary or secondary amino group with a polycarboxylic anhydride.

6. Use according to any of Claims 1 to 5, characterised in that component b) used comprises amino alcohols containing at least one tertiary amino group.

7. Use according to any of Claims 1 to 6, characterised in that component b) used comprises products of the reaction of epoxy resins with carboxylic acids and/or amines.

8. Use according to any of Claims 1 to 7, characterised in that component c) used comprises polyisocyanates and/or diepoxy compounds, if appropriate also monoisocyanates and/or monoepoxy compounds.

9. Use according to Claim 8, characterised in that component b) used comprises the product of the reaction of low-molecular-weight epoxy resins with polycarboxylic acids and/or polycarboxylic anhydrides and aminocarboxylic acids containing at least one tertiary amino group and/or polyamines containing at least one tertiary and at least one primary or secondary amino group, esterification subsequently being carried out, if appropriate, with further components a) and b), and modification being carried out, if appropriate, with polyisocyanates.

10. Use according to Claims 1 to 9, characterised in that component c) used comprises a monoisocyanate containing at least one tertiary amino group.

11. Use according to Claims 1 to 10, characterised in that component c) used comprises a polyamine containing at least one tertiary and at least one primary or secondary amino group.

12. Use according to Claim 1, characterised in that to obtain the polyester
    a) polycarboxylic acids or anhydrides thereof, if appropriate together with monocarboxylic acids,
    b) polyols, if appropriate together with monools, components a) and/or b) containing ethylenically unsaturated double bonds,
    c1) mercapto compounds containing at least one tertiary amino group, and, if appropriate
    c2) further modifying components, have been reacted, with the proviso that the product contains

10

tertiary amino groups which originate essentially or entirely from component c1).

**13.** Use according to Claim 1, characterised in that to obtain the polyester, relatively high-molecular-weight epoxy resins containing on average at least 3 epoxide groups per molecule have been reacted with polycarboxylic acids and/or polycarboxylic anhydrides and with an aminocarboxylic acid containing at least one tertiary amino group and/or polyamines containing at least one tertiary and at least one primary or secondary amino group.

**Revendications**

**1.** Utilisation d'une composition de revêtement contenant un polyester présentant des groupes carboxyle et des groupes amino tertiaires, en tant qu'agent réticulant une résine époxydique présentant, en moyenne, plus d'un groupe époxyde par molécule, le rapport des groupes carboxyle libres du polyester au nombre des groupes époxyde de la résine époxydique se situant dans la plage de 1:5 à 5:1, des solvants organiques, des adjuvants et additifs usuels et, le cas échéant, des pigments, avec la condition que le polyester ait été obtenu par des réactions d'estérification et/ou de transestérification et, le cas échéant d'addition, simultanées ou par étapes,

(a) d'acides polycarboxyliques ou de leurs anhydrides, le cas échéant conjointement avec des acides monocarboxyliques ;

(b) de polyols, le cas échéant conjointement avec des monoalcools, et, le cas échéant,

(c) un composant capable de réagir avec le produit de réaction de (a) et (b), qui contient, le cas échéant, des groupes amino tertiaires,

le polyester contenant des groupes amino tertiaires qui sont issus du composant (a) et/ou (b) et/ou (c), le produit de réaction de (a), (b) et, le cas échéant, (c) présentant un indice d'acide de 5 à 200, de préférence de 10 à 130, et un indice d'amine de 3 à 150, de préférence, de 10 à 100,

pour le laquage de réparation de carrosseries d'automobiles.

**2.** Utilisation selon la revendication 1, caractérisée par le fait que, comme composant (a), sont utilisés des acides aminocarboxyliques présentant au moins un groupe amino tertiaire.

**3.** Utilisation selon la revendication 2, caractérisée par le fait que, comme composant (a), est utilisé l'acide pyridine-carboxylique-3.

**4.** Utilisation selon la revendication 1, caractérisée par le fait que, comme composant (a), est utilisé le produit de réaction d'un aminoalcool contenant au moins un groupe amino tertiaire avec un anhydride d'acide polycarboxylique.

**5.** Utilisation selon la revendication 1, caractérisée par le fait que, comme composant (a), est utilisé le produit de réaction d'une polyamine présentant au moins un groupe amino tertiaire et au moins un groupe amino primaire ou secondaire, et d'un anhydride d'acide polycarboxylique.

**6.** Utilisation selon l'une quelconque des revendications 1 à 5, caractérisée par le fait que, comme composant (b), sont utilisés des aminoalcools présentant au moins un groupe amino tertiaire.

**7.** Utilisation selon l'une quelconque des revendications 1 à 6, caractérisée par le fait que, comme composant (b), sont utilisés des produits de réaction de résines époxydiques avec des acides carboxyliques et/ou des amines.

**8.** Utilisation selon l'une quelconque des revendications 1 à 7, caractérisée par le fait que, comme composant (c), sont utilisés des polyisocyanates et/ou des composés diépoxydiques, le cas échéant également des monoisocyanates et/ou des composés monoépoxydiques.

**9.** Utilisation selon la revendication 8, caractérisée par le fait que, comme composant (b), est utilisé le produit de réaction de résines époxydiques de faible masse moléculaire, avec des acides polycarboxyliques et/ou des anhydrides d'acides polycarboxyliques et des acides aminocarboxyliques présentant au moins un groupe amino tertiaire et/ou des polyamines présentant au moins un groupe amino tertiaire et au moins un groupe amino primaire ou secondaire, étant ensuite le cas échéant encore estérifié par d'autres composants (a) et (b) et, le cas échéant, modifié par des polyisocyanates.

10. Utilisation selon l'une quelconque des revendications 1 à 9, caractérisée par le fait que, comme composant (c), est utilisé un monoisocyanate présentant au moins un groupe amino tertiaire.

11. Utilisation selon l'une quelconque des revendications 1 à 10, caractérisée par le fait que, comme composant (c), est utilisée une polyamine présentant au moins un groupe amino tertiaire et au moins un groupe amino primaire ou secondaire.

12. Utilisation selon la revendication 1, caractérisée par le fait que, pour la préparation du polyester, ont été mis à réagir :
  (a) des acides polycarboxyliques ou leurs anhydrides, le cas échéant conjointement avec des acides monocarboxyliques;
  (b) des polyols, le cas échéant conjointement avec des monoalcools,
les composants (a) et/ou (b) contenant des doubles liaisons d'insaturation éthylénique ; et
  (c1) des composés mercapto présentant au moins un groupe amino tertiaire, et, le cas échéant,
  (c2) d'autres composants modifiants,
avec la condition que le produit contienne des groupes amino tertiaires qui sont issus essentiellement ou totalement du composant (c1).

13. Utilisation selon la revendication 1, caractérisée par le fait que, pour la préparation du polyester, ont été mis à réagir des résines époxydiques de masse moléculaire élevée, présentant, en moyenne, au moins trois groupes époxyde par molécule, avec des acides polycarboxyliques et/ou des anhydrides d'acides polycarboxyliques, et avec un acide aminocarboxylique présentant au moins un groupe amino tertiaire et/ou des polyamines présentant au moins un groupe amino tertiaire et au moins un groupe amino primaire ou secondaire.